# EUROPEAN PATENT APPLICATION

(11) **EP 2 314 911 A2**
(43) Date of publication of application: **27.04.2011**
(21) Application number: 10013705.8
(22) Date of filing: 15.10.2010
(51) Int. Cl.: F21V 8/00, G02B 6/00

(54) **Light source apparatus**

(30) Priority: 26.10.2009 TW 98136188
(71) Applicant: Young Lighting Technology Corporation, Hsin-Chu 300 (TW)
(72) Inventor: Wang, Wei-Chih, Hsin-Chu 300 Taiwan (CN); Tseng, Chi-Ming, Hsin-Chu 300 Taiwan (CN); Lan, Yu-Chin, Hsin-Chu 300 Taiwan (CN)
(74) Representative: Wagner, Bernhard Peter

(57) **Abstract**

A light source apparatus includes a light guide plate, light scattering micro-structures, at least a light-emitting module, and a front cover. The light guide plate has a first surface, a second surface opposite thereto, at least a light incident surface connecting the first and the second surfaces, a scattering area, and a reflecting area surrounding the scattering area. The light scattering micro-structures are disposed on at least one of the first and the second surfaces and within the scattering area. The light-emitting module is disposed beside the light incident surface and capable of emitting a light beam entering the light guide plate through the light incident surface. The front cover covers the reflecting area and has a light emerging area opposite to the scattering area. The light emerging area capable of being passed through by the light beam has a shape similar to a shape of the scattering area.

## Description

### CROSS-REFERENCE TO RELATED APPLICATION

This application claims the priority benefit of Taiwan application serial no. 98136188, filed on October 26, 2009. The entirety of the above-mentioned patent application is hereby incorporated by reference herein and made a part of this specification.

### BACKGROUND OF THE INVENTION

### Field of the Invention

The invention relates to a light source. More particularly, the invention relates to a light source apparatus adopting a light guide plate.

### Description of Related Art

With advancement of illumination technology, illumination sources adopted in lightings including traditional incandescent bulbs, conventional florescent tubes, and light-emitting diodes (LEDs) are rapidly developed in recent years. The LEDs are environment-friendly, low power consumption, and have long life span, fast launch speed, and small volume. Besides, power efficiency of the LEDs is improved together with the development of illumination technology. Hence, the LEDs tend to be applied to general lightings little by little in replacement of the conventional florescent tubes.

The LEDs are usually designed as point light sources centered on the focus, thus easily giving concentrated glare light beams to human visual systems. To release discomfort of human eyes, recessed lamps with optical lenses and reflective lamp shades are developed to prevent the light beams from directly entering into the human eyes. However, the reflective lamp shades may be at a certain height, so as to achieve light condensing and mixing effects. As such, indoor height is sacrificed.

In FIGs. 2 and 3 of Taiwan patent no. I313776, a backlight module including four linear light sources and a light guide plate is disclosed. FIG. 2 of Taiwan patent no. M332777 indicates a first LED and a second LED disposed on a light source substrate. FIG. 2 of Taiwan patent no. M334468 shows a light-emitting module, and a light guide component, a heat dissipation element, a plurality of LEDs, a reflective material, and an optical sheet are disposed on a substrate. FIG. 2 of Taiwan patent no. M362952 illustrates a light guide plate having a first surface and a second surface opposite to the first surface. A light reflecting surface is formed on the first surface, and a plurality of protrusions protruding toward the second surface are formed on an inner side of the light reflecting surface. FIG. 1 of Taiwan patent no. M350660 indicates a recessed lamp having a recessed lamp shape, a power inlet, and a holder. The recessed lamp shape is capable of being laterally installed into a light source.

FIG. 1 of Taiwan patent no. M333505 illustrates an LED ceiling downlight including a metal lamp for heat dissipation, at least a surface mounting LED disposed in the metal lamp, a corn-shaped reflector, and a ballast. In addition, Taiwan patents nos. M341152, M337674, M316366, M296342, and M341161 also disclose various recessed lamps. Taiwan patents nos. M334268, M330571, and M326998 disclose various lightings. Moreover, Taiwan patent no. M357384 discloses an illumination apparatus with variable color temperature, and FIG. 1 of Taiwan patent no. M338524 illustrates an illumination unit capable of adjusting luminance and color temperature.

### SUMMARY OF THE INVENTION

The invention is directed to a light source apparatus having favorable light efficiency and small thickness.

Numerous features and advantages of the invention may be better understood by referring to the disclosure herein.

In an embodiment of the invention, a light source apparatus including a light guide plate, a plurality of light scattering micro-structures, at least a light-emitting module, and a front cover is provided. The light guide plate has a first surface, a second surface opposite to the first surface, and at least a light incident surface connecting the first surface and the second surface. Besides, the light guide plate has a scattering area and a reflecting area surrounding the scattering area. The light scattering micro-structures are disposed on at least one of the first surface and the second surface and within the scattering area. The light-emitting module is disposed beside the light incident surface and capable of emitting a light beam entering the light guide plate through the light incident surface. The front cover covers the reflecting area and has a light emerging area opposite to the scattering area. The light emerging area is capable of being passed through by the light beam and has a shape similar to a shape of the scattering area.

According to an exemplary embodiment of the invention, the embodiment may have at least one of the following advantages, in the light source apparatus, the light scattering micro-structures are disposed in the scattering area of the light guide plate, and therefore the light beam is mostly emitted out through the scattering area. Additionally, the light emerging area of the front cover is opposite to the scattering area. A shape of the light emerging area is similar to a shape of the scattering area, and the light beam passes through the light emerging area, such that the light beam may be transmitted out of the light source apparatus from the scattering area through the light emerging area without being blocked by the front cover. As such, the light source apparatus described in the embodiments of the invention has favorable light efficiency.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention and are incorporated in and constitute a part of this specification. The drawings illustrate embodiments of the invention and, together with the descriptions, serve to explain the principles of the invention.

FIG. 1A is a front view illustrating a light source apparatus according to an embodiment of the invention.

FIG. 1B is a front view illustrating the light source apparatus depicted in FIG. 1A after a front cover and an optical sheet set are removed.

FIG. 1C is a cross-sectional view illustrating the light source apparatus depicted in FIG. 1A along line I-I of FIG. 1B.

FIG. 2 is a schematic view illustrating a luminance measuring position of the light source apparatus depicted in FIG. 1A.

FIG. 3 is a front view illustrating a light source apparatus after a front cover and an optical sheet set are removed according to another embodiment of the invention.

FIG. 4A is a front view illustrating a light source apparatus according to another embodiment of the invention.

FIG. 4B is a front view illustrating the light source apparatus depicted in FIG. 4A after a front cover and an optical sheet set are removed.

### DESCRIPTION OF EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

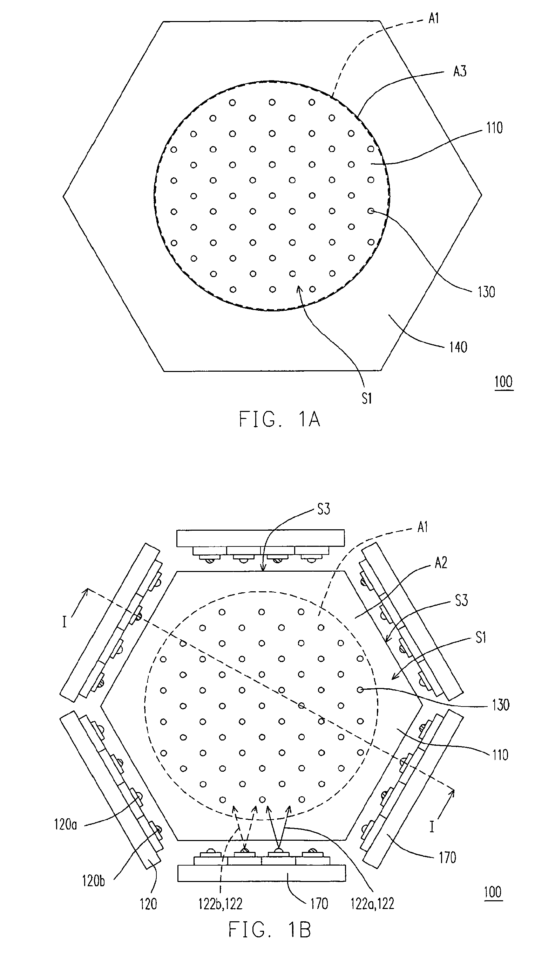

With reference to FIGs. 1A to 1C, a light source apparatus 100 of the embodiment includes a light guide plate 110, a plurality of light scattering micro-structures 130, at least a light-emitting module 120, and a front cover 140. In FIG. 1B, six light-emitting modules 120 are exemplarily shown, but only one of them is marked. Note that the number of the light-emitting modules 120 is not limited in the invention. The light guide plate 110 has a first surface S1, a second surface S2 opposite to the first surface S1, and at least a light incident surface S3 connecting the first surface S1 and the second surface S2. In FIG. 1B, six light incident surfaces S3 are exemplarily shown. Besides, the light guide plate 110 has a scattering area A1 and a reflecting area A2 surrounding the scattering area A1.

The light scattering micro-structures 130 are disposed on at least one of the first surface S1 and the second surface S2. In this embodiment, the light scattering micro-structures 130 are disposed on the second surface S2. However, in other embodiments, the light scattering micro-structures 130 may also be disposed on the first surface S1 or both of the first surface S1 and the second surface S2 simultaneously. Besides, the light scattering micro-structures 130 are disposed in the scattering area A1. According to this embodiment, the light scattering micro-structures 130 are, for example, protruding dots, protruding patterns, recessing dots or recessing patterns on the surface of the light guide plate 110, diffusion dots, scattering particles or other light scattering structures.

The light-emitting module 120 is disposed beside the light incident surface S3 and capable of emitting a light beam 122 entering the light guide plate 110 through the light incident surface S3. When the light beam 122 enters the light guide plate 110, the light beam 122 is totally internally reflected by the first and the second surfaces S1 and S2 and thus restricted within the light guide plate 110. However, the light scattering micro-structures 130 break the total internal reflection, such that a part of the light beam 122 enters the first surface S1 at an incident angle smaller than a critical angle. As such, the part of the light beam 122 passes through the first surface S1 and is then transmitted out of the light source apparatus 100. In addition, according to this embodiment, another part of the light beam 122 is transmitted to the reflecting plate 150 on the second surface S2 due to the scattering effect of the light scattering micro-structures 130. The reflecting plate 150 is capable of reflecting the other part of the light beam 122 and transmitting the other part of the light beam 122 out of the light source apparatus 100 sequentially through the second surface S2 and the first surface S1. A portion of the first surface S1 and a portion of the second surface S2 located in the reflecting area A2 do not have the light scattering micro-structures 130, and thus the light beam 122 may be mostly reflected by the portion of the first surface S1 and the portion of the second surface S2 located in the reflecting area A2. Thereby, the light beam 122 is concentrated at the scattering area A1 having the light scattering micro-structures 130 and then emitted out. Relatively, the light beam 122 is not emitted out of the reflecting area A2 having no light scattering micro-structures 130.

The front cover 140 covers the reflecting area A2 and has a light emerging area A3. The light emerging area A3 is opposite to the scattering area A1, and the light beam 122 may pass through the light emerging area A3. In this embodiment, the light emerging area A3 is a light emerging opening exposing the scattering area A1, and the light beam 122 may be emitted through the light emerging area A3. Nonetheless, in other embodiments, the light emerging area A3 may be a transparent plate or any other structure allowing the light beam 122 to pass through. Besides, in this embodiment, a shape of the light emerging area A3 is similar to a shape of the scattering area A1. For instance, the light emerging area A3 is circular, and so is the scattering area A1. Moreover, according to this embodiment, the light guide plate 110 is a polygonal light guide plate, and the shape of the light guide plate 110 is not limited in the invention. Namely, the light guide plate 110 may be in other geometrical shapes.

In the light source apparatus 100 of this embodiment, the light scattering micro-structures 130 are disposed in the scattering area A1 of the light guide plate 110, and the front cover 140 covers the reflecting area A2. As mentioned above, the light beam 122 is mostly concentrated at the scattering area A1 and then emitted out, and the light beam 122 may pass through the light emerging area A3 of the front cover 140. Therefore, the light beam 122 transmitted in the light guide plate 110 may be passed out of the light source apparatus 100 from the scattering area A1. Additionally, the shape of the light emerging area A3 and the shape of the scattering area A1 are similar, and accordingly the light beam 122 scattered by the scattering area A1 is not blocked by the front cover 140. As such, the light source apparatus 100 of the embodiment may have favorable light efficiency. Proven with experiment, the light efficiency (85%~90%) of the light source apparatus 100 in this embodiment is significantly improved in comparison with the light efficiency (40%~60%) of the conventional lightings.

To further control shape and uniformity of the light beam 122 emitting from the first surface S1, an optical sheet set 160 is disposed on the first surface S1 in the light source apparatus 100 according to this embodiment. In this embodiment, the optical sheet set 160 includes at least one of a diffusing sheet, a prism sheet, and a brightness enhancement film. The light beam 122 is brought into uniformity after passing through the diffusing sheet. Besides, the course of the emergent light beam 122 becomes convergent after the light beam 122 passes through the prism sheet and the brightness enhancement film. Moreover, in other embodiments, the optical sheets in the optical sheet set 160 may also refer to other optical sheets with proper micro-structures.

Unlike the conventional recessed lamp with the reflective lamp shade occupying great space to control the shape of light, the light source apparatus 100 of this embodiment employs the optical sheet set 160 to control the shape and the uniformity of light. Since the thickness of the optical sheet set 160 and the thickness of the light guide plate 110 are much smaller than the height of the reflective lamp shade, the light source apparatus 100 of this embodiment may have smaller thickness. Thereby, the light source apparatus 100 may serve as a recessed lamp embedded into the ceiling, and the small thickness of the light source apparatus 100 relatively increases the indoor height.

In this embodiment, the light source apparatus 100 has at least a pair of light-emitting modules 120 (three pairs are exemplarily shown in FIG. 1B). In FIG. 1B, each pair of the light-emitting modules 120 is respectively disposed at two opposite sides of the light guide plate 110. Each of the light-emitting modules 120 includes at least a first LED 120a and at least a second LED 120b. According to this embodiment as illustrated in FIG. 1B, each of the light-emitting modules 120 has two of the first LEDs 120a and two of the second LEDs 120b, for instance. A correlated color temperature of the first LED 120a is different from a correlated color temperature of the second LED 120b. For instance, the first LED 120a emits a cool-white light beam 122a, and the second LED 120b emits a warm-white light beam 122b. In other words, the correlated color temperature of the light beam 122a is higher than the correlated color temperature of the light beam 122b. The light beams 122a and 122b enter the light guide plate 110 through the light incident surface S3. After the light beams 122a and 122b are mixed in the light guide plate 110 to form the light beam 122, the correlated color temperature of the light beam 122 ranges from the correlated color temperature of the light beam 122a to the correlated color temperature of the light beam 122b.

In addition, each of the light-emitting modules 120 further includes a circuit board 170 electrically connected to the first LEDs 120a and the second LEDs 120b. The first and the second LEDs 120a and 120b are disposed on the circuit board 170. The correlated color temperature of the light beam 122 is changed between the correlated color temperature of the light beam 122a and the correlated color temperature of the light beam 122b by adjusting the current provided by the circuit board 170 to the first and the second LEDs 120a and 120b or by adjusting a driving time of the first and the second LEDs 120a and 120b in each cycle. Besides, when one of the first and the second LEDs 120a and 120b operates, and the other one does not operate, the correlated color temperature of the light beam 122 may be either the correlated color temperature of the light beam 122a or the correlated color temperature of the light beam 122b. For example, the correlated color temperature of the light beam 122a is 6000K, and the correlated color temperature of the light beam 122b is 3000K. Therefore, the light beam 122 mixed by the light beams 122a and 122b may have the correlated color temperature ranging from 3000K to 6000K or remain at 3000K or 6000K, but the invention is not limited herein.

To better improve the color and luminance uniformity of the light beam 122 emitting from the light source apparatus 100, the first and the second LEDs 120a and 120b in one light-emitting module 120 of each pair of the light-emitting modules 120 respectively face the second and the first LEDs 120b and 120a in the other light-emitting module 120 of each pair of the light-emitting modules 120. Thereby, the light beams 122a and 122b may be well mixed to improve the color and luminance uniformity of the light beam 122.

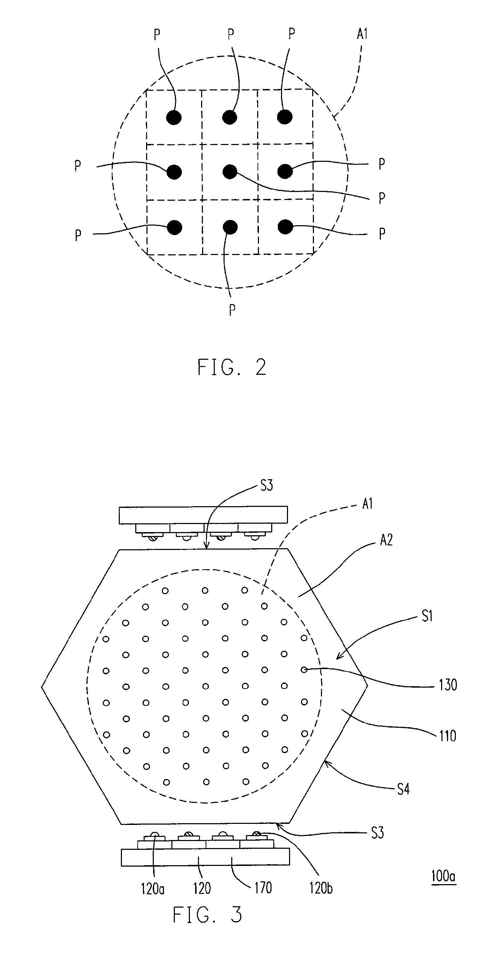

With reference to FIGs. 1A and 2, a method of measuring luminance of the light source apparatus 100 includes defining an inscribed square in the reflecting area A1 and dividing the inscribed square into nine squares. Centers P of the nine squares serve as measuring positions of luminance. The luminance uniformity is calculated by dividing the minimum luminance measured from the nine centers P by the maximum luminance. Proven with experiment, the luminance uniformity of the light source apparatus 100 reaches 80% above according to this embodiment.

From measurement, the total power consumption of the light source apparatus 100 in this embodiment is 10W approximately. In comparison with the conventional power-saving light bulb with a power consumption 24W, the light source apparatus 100 saves 55% power or more.

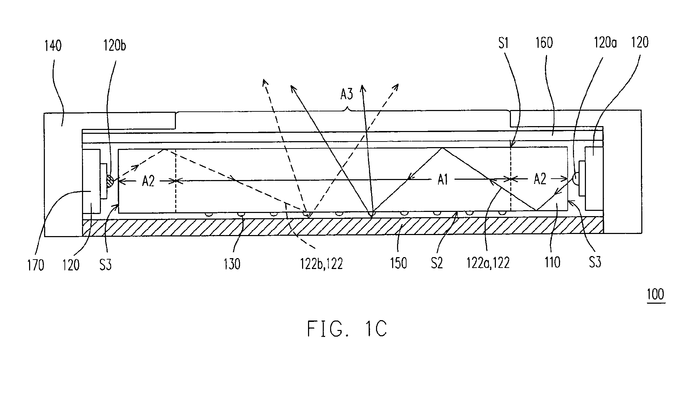

As shown in FIG. 3, a light source apparatus 100a of this embodiment is similar to the light source apparatus 100 depicted in FIG. 1B, while the difference between them is described hereinafter. In the light source apparatus 100 depicted in FIG. 1B, the light-emitting module 120 is disposed beside each of the six light incident surfaces S3 of the light guide plate 110. However, in the light source apparatus 100a of this embodiment, the light-emitting modules 120 are disposed at some sides (e.g. light incident surfaces S3) of the light guide plate 110 but are not disposed at other sides (e.g. four sides S4 which are not the light incident surfaces S3 as shown in FIG. 3). That is to say, the light-emitting modules 120 are not necessary to be disposed at each side of the light guide plate 110 in the invention. In addition, according to other embodiments, the reflecting plate 150 depicted in FIG. 1C may not only be disposed on the second surface S2 but also be disposed on at least one of the sides S4 and the portion of the first surface S1 located in the reflecting area A2.

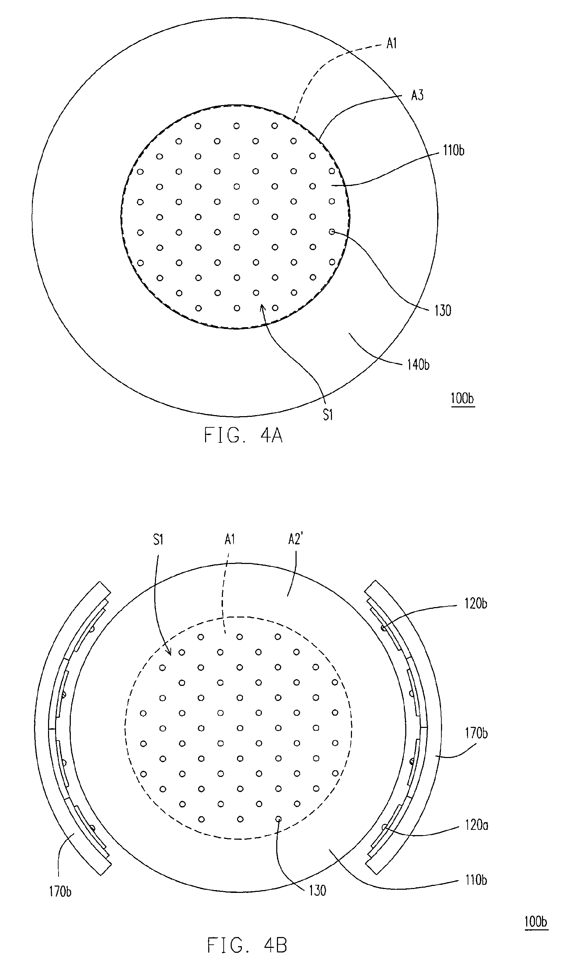

As shown in FIGs. 4A and 4B, a light source apparatus 100b of this embodiment is similar to the light source apparatus 100 depicted in FIGs. 1A and 1B, while the difference between them is described hereinafter. In the light source apparatus 100b of this embodiment, the light guide plate 110b is a circular light guide plate, and the circuit board 170b is bent along an edge of the circular light guide plate 110b. Besides, in this embodiment, the front cover 140b is circular as well.

Note that the shapes of the light guide plate, the scattering area, the light emerging area, and the front cover are not limited in this invention. Namely, in other embodiments, the shapes of the above-referenced elements and areas may be other geometrical shapes or irregular shapes.

Based on the above embodiment, the embodiment may have at least one of the following advantages, in the light source apparatus described in the embodiments of the invention, the light scattering micro-structures are disposed in the scattering area of the light guide plate, and therefore the light beam is mostly concentrated at the scattering area and then emitted out. Additionally, the light emerging area of the front cover is opposite to the scattering area, and the shape of the light emerging area is similar to the shape of the scattering area. The light beam passes through the light emerging area and is then transmitted out of the light source apparatus from the scattering area through the light emerging area without being blocked by the front cover. As such, the light source apparatus described in the embodiments of the invention has favorable light efficiency.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A light source apparatus, comprising:
a light guide plate having a first surface, a second surface opposite to the first surface, at least a light incident surface connecting the first surface and the second surface, a scattering area, and a reflecting area surrounding the scattering area;
a plurality of light scattering micro-structures disposed on at least one of the first surface and the second surface and being within the scattering area;
at least a light-emitting module disposed beside the at least a light incident surface and capable of emitting a light beam, wherein the light beam is capable of entering the light guide plate through the at least a light incident surface; and
a front cover covering the reflecting area and having a light emerging area opposite to the scattering area, wherein the light emerging area is capable of being passed through by the light beam and a shape of the light emerging area is similar to a shape of the scattering area.

2. The light source apparatus as claimed in claim 1, wherein the light emerging area is a light emerging opening.

3. The light source apparatus as claimed in claim 1, wherein the light emerging area is circular, and the scattering area is circular.

4. The light source apparatus as claimed in claim 1, wherein the light guide plate is a circular light guide plate or a polygonal light guide plate.

5. The light source apparatus as claimed in claim 1, further comprising a reflecting plate disposed on the second surface.

6. The light source apparatus as claimed in claim 1, further comprising an optical sheet set disposed on the first surface, wherein the optical sheet set comprises at least one of a diffusing sheet, a prism sheet, and a brightness enhancement film.

7. The light source apparatus as claimed in claim 1, wherein the at least a light-emitting module comprises at least a first light-emitting diode and at least a second light-emitting diode, and a correlated color temperature of the at least a first light-emitting diode is different from a correlated color temperature of the at least a second light-emitting diode.

8. The light source apparatus as claimed in claim 7, wherein the at least a first light-emitting diode is capable of emitting cool-white light, and the at least a second light-emitting diode is capable of emitting warm-white light.

9. The light source apparatus as claimed in claim 7, wherein the at least a light-emitting module further comprises a circuit board electrically connected to the at least a first light-emitting diode and the at least a second light-emitting diode, and the at least a first light-emitting diode and the at least a second light-emitting diode are disposed on the circuit board.

10. The light source apparatus as claimed in claim 1, wherein the at least a light-emitting module refers to at least a pair of light-emitting modules respectively disposed at two opposite sides of the light guide plate.

11. The light source apparatus as claimed in claim 10, wherein each of the at least a pair of light-emitting modules comprises at least a first light-emitting diode and at least a second light-emitting diode, a correlated color temperature of the at least a first light-emitting diode is different from a correlated color temperature of the at least a second light-emitting diode, and the at least a first light-emitting diode and the at least a second light-emitting diode in one of the at least a pair of light-emitting modules respectively face the at least a second light-emitting diode and the at least a first light-emitting diode in the other one of the at least a pair of light-emitting modules.
